# EUROPEAN PATENT SPECIFICATION

(11) **EP 4 260 676 B1**
(45) Date of publication and mention of the grant of the patent: **23.04.2025**
(21) Application number: 23164541.7
(22) Date of filing: 28.03.2023
(51) Int. Cl.: A01D 34/00, A01D 69/02, A01D 34/81, A01D 34/68, A01D 34/69, A01D 101/00

(54) **ROBOT LAWNMOWER WITH OFF-AXIS DRIVING MOTOR**
ROBOTERRASENMÄHER MIT AUSSERAXIALEM ANTRIEBSMOTOR
TONDEUSE À GAZON ROBOTISÉE AVEC MOTEUR D'ENTRAÎNEMENT HORS AXE

(30) Priority: 11.04.2022 IT 202200007133
(43) Date of publication of application: 18.10.2023
(73) Proprietor: Stiga S.p.A. in breve anche St. S.p.A., 31033 Castelfranco Veneto (TV) (IT)
(72) Inventor: VILLANOVA, Marco, 31020 SERNAGLIA DELLA BATTAGLIA TV (IT); FIOR, Roberto, 31033 CASTELFRANCO VENETO TV (IT)
(74) Representative: Mittler, Andrea

(56) References cited:
- EP-A1- 0 750 083
- EP-A1- 3 183 949
- WO-A1-2016/185127
- DE-A1- 1 934 442
- US-A1- 2021 282 322

## Description

The present invention relates to a robot lawnmower with an off-axis driving motor.

The use of autonomous robot lawnmowers having different sizes based on the surface of the lawn and user needs in terms of volume occupied by the robot lawnmower is increasingly common in the field of gardening.

The robot lawnmower is to have good power autonomy, a sufficiently broad cutting deck and efficient driving motors.

Generally, robot lawnmowers have an electric motor for each of the two driving wheels, wherein the electric motor is in axis with the respective driving wheel, i.e., the rotation axis of the rotor of the electric motor coincides with the rotation axis of the driving wheel. The body of the electric motor is integral with the base frame of the robot lawnmower.

Examples of robot lawnmower with in axis motors are shown in EP-3157803B1 and US-11169542B2.

Disadvantageously, the in axis mounting of the driving motors forces the cutting deck to be moved forwards, increasing the length of the robot lawnmower.

Alternatively, it would be necessary to widen the robot lawnmower or reduce the sizes of the cutting deck, with consequent decrease in the cutting efficiency.

WO-2016/185127 describes a lawnmower comprising a base frame and two driving wheels driven by a single electric motor by means of a transmission comprising a pinion which meshes with a crown gear of a driving wheel. The rotation axis of the pinion, coincident with the rotation axis of the transmission shaft, is parallel to the rotation axis of the driving wheel but distinct therefrom. The rotation axis of the crankshaft of the motor is parallel to but distinct from the rotation axis of the transmission shaft, i.e., it is distinct from the rotation axis of the pinion.

EP-3183949 describes a robot lawnmower comprising a base frame and two driving wheels, wherein each driving wheel is driven by a respective electric motor.

US-2021/282322 discloses a robot lawnmower comprising a base frame, two driving wheels and at least one directional idler wheel, wherein each driving wheel is driven by a respective electric motor. Each motor comprises a pinion, wherein the rotation axis of the pinion coincides with the rotation axis of the crankshaft of the motor which is fixed to a bracket to which the driving wheel is rotatably fixed. The rotation axis of the pinion is parallel to the rotation axis of the driving wheel.

It is the object of the present invention to provide a robot lawnmower with limited volume which maintains the same cutting efficiency.

It is the further object of the present invention for the robot lawnmower not to provide a cutting deck with reduced sizes.

It is a further object again of the present invention for the robot lawnmower to use conventional driving motors without particular construction and coupling complications with the driving wheels.

According to the invention, said and further objects are achieved by a robot lawnmower as defined in claim 1.

Advantageously, the sizes of the recess in which the cutting deck is accommodated are not affected by the presence of the motors adapted to drive the driving wheels.

Therefore, the robot lawnmower may be designed with the cutting deck centered between the driving wheels, with an optimal distribution of the weight and reduced longitudinal sizes of the robot lawnmower.

Advantageously, a robot lawnmower with reduced sizes is obtained, cutting deck sizes being equal, with performing motors which do not affect the volume on the ground of the robot lawnmower.

The connection to the base frame is simple (by means of a common bracket); the mechanical connections are elementary (pinion and crown gear) and easily controllable for effective maintenance.

These and other features of the present invention will become more apparent from the following detailed description of practical embodiments thereof shown by way of non-limiting examples in the accompanying drawings, in which:
Figure 1 shows a perspective view of a robot lawnmower according to the present invention;
Figure 2 shows a front view of the robot lawnmower;
Figure 3 shows a top plan view of the robot lawnmower;
Figure 4 shows a sectional view according to line IV-IV of Figure 3;
Figure 5 shows the enlarged content of circle A of Figure 1.

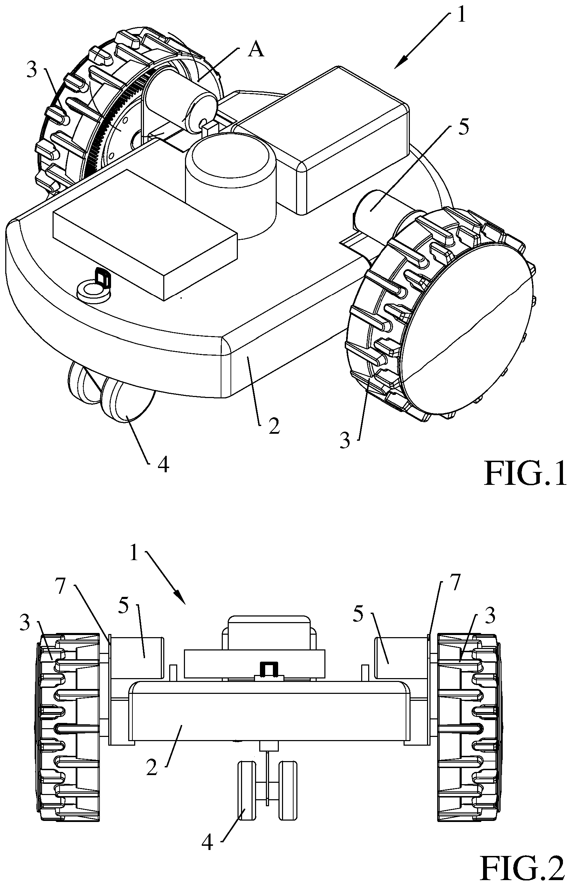

A robot lawnmower 1 comprises a base frame 2, a cover (not shown) associated with the base frame 2, two driving wheels 3 and at least one directional idler wheel 4 (Figures 1-3).

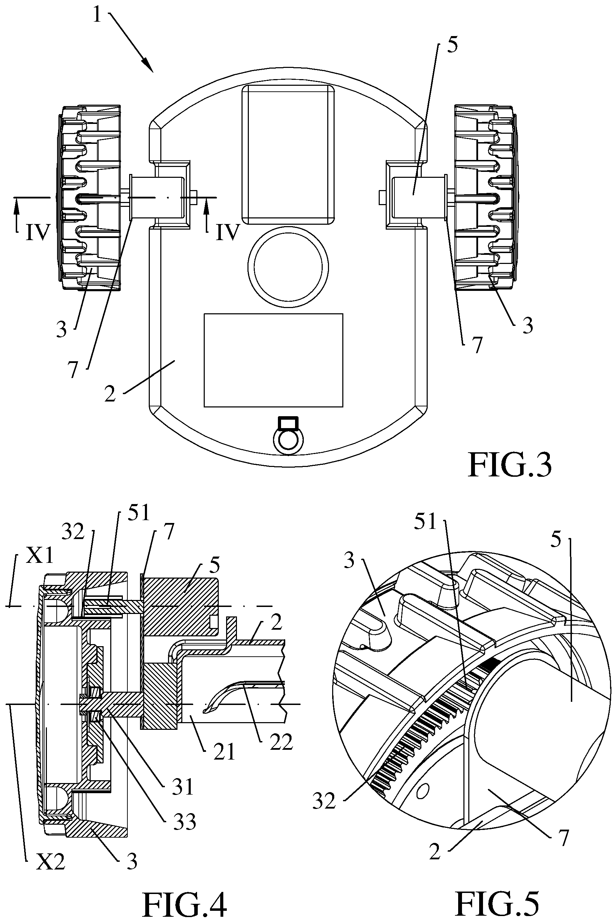

Each driving wheel 3 is driven by a respective electric motor 5 by means of a pinion 51 which meshes with a crown gear 32 of the driving wheel 3 (Figures 4 and 5).

Motor 5 is fixed to a bracket 7 to which the driving wheel 3 is rotatably fixed by means of a hub 31 which is integral with bracket 7 and extends outwards from bracket 7, as shown in Figure 4, for example.

Bracket 7 is integral with the base frame 2 which provides a recess 21 for a cutting deck 22 comprising one or more cutting blades.

The axis of hub 31 corresponds to the rotation axis X2 of the driving wheel 3, wherein the driving wheel 3 is rotatably mounted on hub 31 by means of a bearing 33 (Figure 4).

The rotation axis X1 of pinion 51 is parallel to the rotation axis X2 of the driving wheel 3 but separate therefrom, i.e. motor 5 is not in axis with the driving wheel 3, i.e. motor 5 is off-axis with respect to the driving wheel 3.

As apparent in Figure 4, the rotation axis X1 of pinion 51 coincides with the rotation axis of the crankshaft of motor 5, i.e., advantageously complicated transmissions are not provided between the crankshaft of motor 5 and pinion 51 which directly receives the rotary driving motion of the crankshaft of motor 5 without changing the rotation axis.

Bracket 7 extends upwards so that motor 5 can be mounted in a high position of bracket 7, extending inwards, above the base frame 2, in particular above recess 21.

The driving wheel 3, driven in rotation by pinion 51 which engages the crown gear 32, rotates on hub 31 which is fixed to bracket 7. Alternatively, hub 31 may be integral with the driving wheel 3 and rotate with respect to bracket 7, i.e., the position of the bearing 33 may vary, motor 5 in any case remaining off-axis.

Advantageously, the sizes of recess 21 in which the cutting deck 22 is accommodated are not affected by the presence of the motors 5 adapted to drive the driving wheels 3.

Therefore, the robot lawnmower 1 may be designed with the cutting deck 22 centered between the driving wheels 3, with an optimal distribution of the weight and reduced longitudinal sizes of the robot lawnmower 1.

Advantageously, a robot lawnmower 1 with reduced sizes is obtained, cutting deck 22 sizes being equal, with performing motors 5 which do not affect the volume on the ground of the robot lawnmower 1.

The connection to the base frame 2 is simple (by means of a common bracket 7); the mechanical connections are elementary (pinion 51 and crown gear 32) and easily controllable for effective maintenance.

The advantages described above remain in the case where means for damping bumps are to be provided in the connection area between bracket 7 and the base frame 2, for example a movable slide in a guide integral with the base frame 2, in which the slide is integral with bracket 7 and is kept in equilibrium by elastic means.

Alternatively, bump damping means may be provided which allow the rotation of bracket 7 (and therefore of the driving wheel 3) with respect to the base frame 2, with elastic means adapted to keep bracket 7 in equilibrium.

Alternatively, the damping means may be associated with the cover by means of the connection between the cover and the base frame 2.

## Claims

1. Robot lawnmower (1) comprising a base frame (2), two driving wheels (3) and at least one directional idler wheel (4), wherein each driving wheel (3) is driven by a respective electric motor (5),
each motor (5) comprises a pinion (51), wherein the rotation axis (X1) of the pinion (51) coincides with the rotation axis of the crankshaft of the motor (5),
wherein the motor (5) is fixed to a bracket (7) to which the driving wheel (3) is rotatably fixed,
wherein the rotation axis (X1) of the pinion (51) is parallel to the rotation axis (X2) of the driving wheel (3),
**characterized in that**
the pinion (51) meshes with a crown gear (32) of the driving wheel (3), the rotation axis (X1) of the pinion (51) is distinct from the rotation axis (X2) of the driving wheel (3), the motor (5) being off-axis with respect to the driving wheel (3).
wherein the bracket (7) extends upwards so that the motor (5) is mounted in a high position of the bracket (7), extending inwards, above the base frame (2), above a recess (21) of the base frame (2) in which a cutting deck (22) is housed.

2. Robot lawnmower (1) according to claim 1, **characterized in that** the bracket (7) is integral with the base frame (2).

3. Robot lawnmower (1) according to any one of the preceding claims, **characterized in that** the driving wheel (3) is rotatably mounted on the hub (31) by means of a bearing (33).

## Patentansprüche

1. Mähroboter (1) mit einem Grundrahmen (2), zwei Antriebsrädern (3) und mindestens einem Richtungsleitrad (4), wobei jedes Antriebsrad (3) von einem jeweiligen Elektromotor (5) angetrieben wird,
wobei jeder Motor (5) ein Ritzel (51) aufweist, wobei die Drehachse (X1) des Ritzels (51) mit der Drehachse der Kurbelwelle des Motors (5) übereinstimmt,
wobei der Motor (5) an einer Halterung (7) befestigt ist, an der das Antriebsrad (3) drehbar befestigt ist,
wobei die Drehachse (X1) des Ritzels (51) parallel zur Drehachse (X2) des Antriebsrads (3) ist,
**dadurch gekennzeichnet,**
**dass** das Ritzel (51) mit einem Zahnkranz (32) des Antriebsrads (3) kämmt, dass die Drehachse (X1) des Ritzels (5) von der Drehachse (X2) des Antriebsrads (3) verschieden ist und der Motor (5) in Bezug auf das Antriebsrad (3) achsenversetzt angeordnet ist,
wobei sich die Halterung (7) nach oben erstreckt, so dass der Motor (5) in einer hohen Position der Halterung (7) montiert ist, sich über dem Grundrahmen (2) nach innen erstreckt, und zwar über einer Aussparung (21) des Grundrahmens (2), in der ein Schneiddeck (22) untergebracht ist.

2. Mähroboter (1) nach Anspruch 1,
**dadurch gekennzeichnet, dass** die Halterung (7) einstückig mit dem Grundrahmen (2) ausgebildet ist.

3. Mähroboter (1) nach einem der vorhergehenden Ansprüche,
**dadurch gekennzeichnet, dass** das Antriebsrad (3) mittels eines Lagers (33) drehbar auf der Nabe (31) gelagert ist.

## Revendications

1. Tondeuse à gazon robotisée (1) comprenant un bâti de base (2), deux roues motrices (3) et au moins une roue folle directionnelle (4), dans laquelle chaque roue motrice (3) est entraînée par un moteur électrique (5) respectif,
chaque moteur (5) comprend un pignon (51), dans laquelle l'axe de rotation (X1) du pignon (51) coïncide avec l'axe de rotation du vilebrequin du moteur (5),
dans laquelle le moteur (5) est fixé sur un support (7) auquel la roue motrice (3) est fixée de manière rotative,
dans laquelle l'axe de rotation (X1) du pignon (51) est parallèle à l'axe de rotation (X2) de la roue motrice (3),
**caractérisée en ce que** :
le pignon (51) s'engrène avec une couronne dentée (32) de la roue motrice (3),
l'axe de rotation (X1) du pignon (51) est distinct de l'axe de rotation (X2) de la roue motrice (3), le moteur (5) étant hors axe par rapport à la roue motrice (3),
dans laquelle le support (7) s'étend vers le haut de sorte que le moteur (5) est monté dans une position haute du support (7), s'étendant vers l'intérieur, au-dessus du bâti de base (2), au-dessus d'un évidement (21) du bâti de base (2) dans lequel un plateau de coupe (22) est logé.

2. Tondeuse à gazon robotisée (1) selon la revendication 1, **caractérisée en ce que** le support (7) est solidaire avec le bâti de base (2).

3. Tondeuse à gazon robotisée (1) selon l'une quelconque des revendications précédentes, **caractérisée en ce que** la roue motrice (3) est montée, de manière rotative, sur le moyeu (31) au moyen d'un palier (33).
